# EUROPEAN PATENT SPECIFICATION

(11) **EP 4 280 579 B1**
(45) Date of publication and mention of the grant of the patent: **31.12.2025**
(21) Application number: 23200954.8
(22) Date of filing: 09.08.2018
(51) Int. Cl.: G06F 3/16, G10L 15/22, H04M 1/724, H04M 1/72451, G10L 15/08, G10L 17/00

(54) **HOTWORD RECOGNITION AND PASSIVE ASSISTANCE**
HOTWORD-ERKENNUNG UND PASSIVE ASSISTENZ
RECONNAISSANCE DE MOTCLÉ DÉCLENCHEUR ET ASSISTANCE PASSIVE

(43) Date of publication of application: 22.11.2023
(62) Divisional of application: 18759811.5
(73) Proprietor: Google LLC, Mountain View, CA 94043 (US)
(72) Inventor: ALTHAUS, Jan, 8002 Zurich (CH); SHARIFI, Matthew, 8002 Zurich (CH)
(74) Representative: Shipp, Nicholas

(56) References cited:
- WO-A1-2014/159581
- WO-A1-2015/005927
- US-A1- 2018 108 343
- US-A1- 2018 204 569

## Description

### TECHNICAL FIELD

This specification generally relates to automated speech recognition.

### BACKGROUND

The reality of a speech-enabled home or other environment - that is, one in which a user need only speak a query or command out loud and a computer-based system will field and answer the query and/or cause the command to be performed - is upon us. A speech-enabled environment (e.g., home, workplace, school, etc.) can be implemented using a network of connected microphone devices distributed throughout the various rooms or areas of the environment. Through such a network of microphones, a user has the power to orally query the system from essentially anywhere in the environment without the need to have a computer or other device in front of him/her or even nearby. For example, while cooking in the kitchen, a user might directly ask the system "how many milliliters in three cups?" and, in response, receive an answer from the system, e.g., in the form of synthesized voice output. Alternatively, a user might ask the system questions such as "when does my nearest gas station close," or, upon preparing to leave the house, "should I wear a coat today?"

Further, a user may ask a query of the system, and/or issue a command, that relates to the user's personal information. For example, a user might ask the system "when is my meeting with John?" or command the system "remind me to call John when I get back home."
WO 2014159581A1 discloses a method of monitoring an acoustic environment of a mobile device, at least one computer readable medium encoded with instructions that, when executed, perform such a method and/or a mobile device configured to perform such a method is provided. The method comprises receiving, by the mobile device, acoustic input from the environment of the mobile device, detecting whether the acoustic input includes a voice command from a user without requiring receipt of an explicit trigger from the user, and initiating responding to the detected voice command.

### SUMMARY

For a speech-enabled system, the users' manner of interacting with the system is designed to be primarily, if not exclusively, by means of voice input. Consequently, the system, which potentially picks up all utterances made in the surrounding environment including those not directed to the system, must have some way of discerning when any given utterance is directed at the system as opposed, e.g., to being directed at an individual present in the environment. One way to accomplish this is to use a hotword, which by agreement among the users in the environment, is reserved as a predetermined word that is spoken to invoke the attention of the system. In an example environment, the hotword used to invoke the system's attention are the words "OK computer." Consequently, each time the words "OK computer" are spoken, it is picked up by a microphone, conveyed to the system, which may perform speech recognition techniques or use audio features and neural networks to determine whether the hotword was spoken and, if so, awaits an ensuing command or query. Accordingly, utterances directed at the system take the general form [HOTWORD] [QUERY], where "HOTWORD" in this example is "OK computer" and "QUERY" can be any question, command, declaration, or other request that can be speech recognized, parsed and acted on by the system, either alone or in conjunction with the server via the network.

A speech-enabled system may be configured to respond to more than one hotword. With some speech-enabled systems including an always-on display, the system may provide passive assistance to the user in response to detecting some additional hotwords. The system may display information related to a detected hotword and any speech that follows on the always-on display in an unobtrusive way. For example, a user may be having a conversation with a friend about lunch plans. The user's phone may be sitting on the table, and the microphone may be able to detect the conversation. During the conversation, the friend may ask the user, "Are you free for lunch tomorrow?" The user's phone may detect the question and determine whether the question includes a hotword. In addition to "OK computer," the phone may be configured to detect the hotwords such as "are you free" and "don't forget." In response to receiving the audio data of "are you free for lunch tomorrow," the phone identifies the hotword "are you free" and performs speech recognition on the remaining audio data. Based on identifying the hotword "are you free" and generating the transcription "for lunch tomorrow," the phone automatically accesses the user's calendar information and displays relevant calendar information for lunchtime during the following day on the always-on display. The user is able to look at the phone to determine the user's own availability and quickly answer whether the user is free without having to interact with the phone through any buttons or the display or addressing the phone using "OK computer."

According to an innovative aspect of the subject matter described in this application, a method for implementing hotword recognition and passive assistance includes the actions of receiving, by a computing device (i) that is operating in a low-power mode and that includes a display that displays a graphical interface while the computing device is in the low-power mode and (ii) that is configured to exit the low-power mode in response to detecting a first hotword, audio data corresponding to an utterance; determining, by the computing device, that the audio data includes a second, different hotword; in response to determining that the audio data includes the second, different hotword, obtaining, by the computing device, a transcription of the utterance by performing speech recognition on the audio data; based on the second, different hotword and the transcription of the utterance, generating, by the computing device, an additional user interface; and, while the computing device remains in the low-power mode, providing, for output on the display, the additional graphical interface. The actions include, based on the second, different hotword, identify an application accessible by the computing device; and providing the transcription of the utterance to the application. The additional user interface is generated based on providing the transcription of the utterance to the application. The actions include maintaining the computing device in the low-power mode in response to determining that the audio data includes the second, different hotword. The actions include receiving, by the computing device, additional audio data corresponding to an additional utterance; determining, by the computing device, that the additional audio data includes the first hotword; and, in response to determining that the audio data includes the second, different hotword, switching the computing device from the low-power mode to a high-power mode that consumes more power than the low-power mode. Further features of the method are defined in Claim 1.

These and other implementations can each optionally include one or more of the following features. The actions include, after providing, for output on the display, the additional graphical interface, receiving, by the computing device, input that comprises a key press; and, after receiving the input that comprises a key press, switching the computing device to a high-power mode that consumes more power than the low-power mode. The actions include, after switching the computing device to the high-power mode that consumes more power than the low-power mode and while the display remains active, returning the computing device to the low-power mode; and, after returning the computing device to the low-power mode, providing, for output on the display, the user interface. While in the high-power mode, the computing device fetches data from a network at a first frequency. While in the low-power mode, the computing device fetches data from the network at a second, lower frequency. The display is a touch sensitive display. While the computing device is in the low-power mode, the display is unable to receive touch input.

While the computing device is in a high-power mode that consumes more power than the low-power mode, the display is able to receive touch input. The actions include receiving, by the computing device, a first hotword model of the first hotword and a second, different hotword model of the second, different hotword. The action of determining that the audio data includes the second, different hotword includes applying the audio data to the second, different hotword model. The additional graphical interface includes a selectable option that, upon selection by a user, updates an application. The actions include determining, by the computing device, that a speaker of the utterance is not a primary user of the computing device.

The action of obtaining the transcription of the utterance by performing speech recognition on the audio data is in response to determining that the speaker of the utterance is not the primary user of the computing device. The actions include determining, by the computing device, that a speaker of the additional utterance is a primary user of the computing device. The action of switching the computing device from the low-power mode to the high-power mode that consumes more power than the low-power mode is in response to determining that the speaker of the additional utterance is the primary user of the computing device.

Other embodiments of the invention include corresponding systems, apparatus, and computer programs recorded on computer storage devices, each configured to perform the inventive methods.

Particular embodiments of the subject matter described in this specification can be implemented so as to realize one or more of the following advantages. A computing device may be configured to automatically provide information on an always-on display in response to detecting a hotword. By distinguishing between the first hotword, which is configured to switch the computing device from the low-power state to a high power state and the second, different hotword, which is configured to enable the computing device to perform background processing and output information in the low-power state, the techniques described herein provide a mechanism that enables user input to be processed appropriately in different situations and different uses of the computing device. The always-on display in combination with distinguishing between the first and second hotwords provides a low power way to convey information to the user without the user having to actively retrieve the information, which would cause the phone to switch into a mode that consumes more power while the user retrieves the information.

The details of one or more embodiments of the subject matter described in this specification are set forth in the accompanying drawings and the description below. Other features, aspects, and advantages of the subject matter will become apparent from the description, the drawings, and the claims defining the invention.

### BRIEF DESCRIPTION OF THE DRAWINGS

FIG. 1 illustrates an example system that performs hotword recognition and provides passive assistance through an always-on display.
FIG. 2 illustrates an example system that performs hotword recognition and provides passive assistance.
FIG. 3 is a flowchart of an example process for performing hotword recognition and providing passive assistance.
FIG. 4 is an example of a computing device and a mobile computing device.

Like reference numbers and designations in the various drawings indicate like elements.

### DETAILED DESCRIPTION

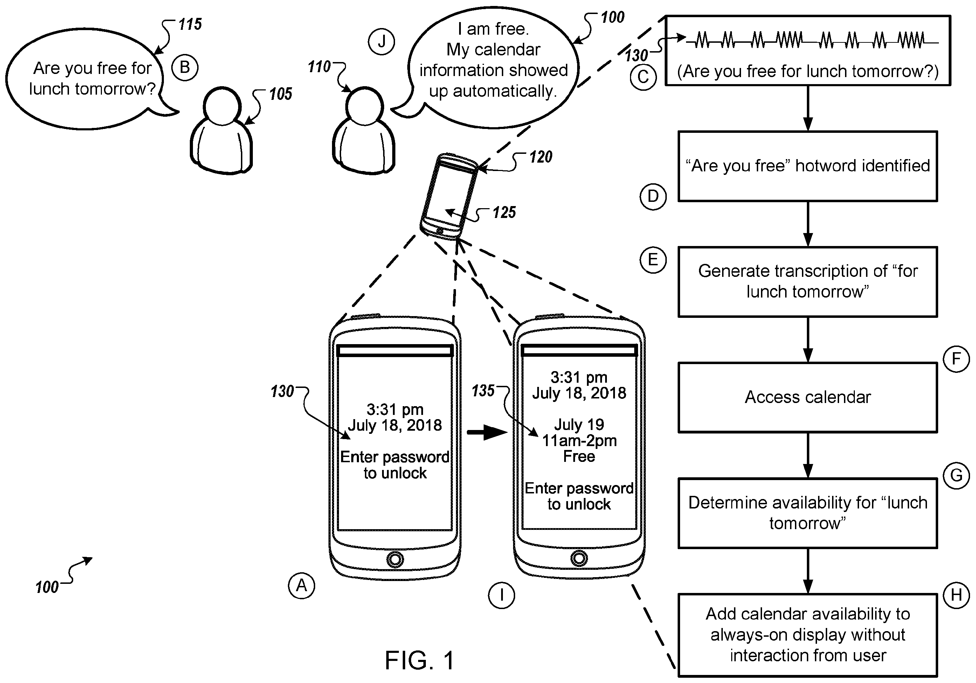

FIG. 1 illustrates an example system 100 for that performs hotword recognition and provides passive assistance through an always-on display. Briefly, and as described in more detail below, user 105 and user 110 are having a conversation. User 105 speaks utterance 115 by asking user 110, "Are you free for lunch tomorrow?" During the conversation, the computing device 120 of the user 110 may be sitting on a table and near enough to detect the utterance 115. Without the user 110 directing a command to the computing device 120, the computing device 120 processes the utterance 115 and displays the calendar information for the user 110 for the following day. The display of the computing device 120 may be always on even when the computing device is in sleep mode or in low-power mode.

In the example shown in FIG. 1, user 105 and user 110 are discussing their lunch plans for the following day. The user 105 may not be directing a command to the computing device 120. The user 110 may be holding the computing device 120 in the user's hand, or the computing device 120 may be sitting on a nearby table or in the user's shirt pocket. The computing device 120 may be any type of device configured to receive audio data such as smart phone, laptop computer, desktop computer, smart speaker, television, smart watch, or any other similar device.

The computing device 120 includes a display 125 that may always be active. When the phone is in sleep mode, locked, or the user 110 has not interacted with or directed a command to the phone for a period of time, the display 125 may be in a low-power state. While in the low-power state, the display 125 may show the current date and time, but may be predominantly blank or "off". While in the low-power state, the display 125 may display information only in a single color, such as grey. While in the low-power state, the display 125 may display information at a lower pixel resolution than in the high-power state. While in the low-power state, the display 125 operates at a reduced brightness, at a predetermined brightness, or up to a maximum brightness that is lower than a maximum brightness of the display 125 when the device operates in the high-power state. As the computing device 120 receives additional messages or notifications, the computing device 120 may update the display 125. For example, if the computing device 120 receives a new e-mail, the computing device 120 may update the display 125 in the low-power state to include an envelope icon.

The low-power state of the display 125 of the computing device 120 may be in contrast to the high-power state of the display 125 of the computing device 120. The high-power state of the display 125 may be the typical state in which the user 110 interacts with the display 125. For example, the user 110 may browse the internet, check e-mail, and write text messages while the display 125 is in a high-power state. The user 110 may adjust the brightness of the display 125 while the display 125 is in the high-power state. In some implementations, the display 125 may be able to receive touch input across an entirety of the display while in the high-power state but not while in the low-power state. For example, the display 125 may be unable to receive touch input in a low-power state, or able to receive touch input only in limited predefined regions.

To switch the display 125 from the low-power state to the high-power state, the user 110 may provide a passcode, a biometric identifier, speak a particular hotword (e.g., OK computer), press a sleep/wake button, or any other similar actions. In some implementations, the hotword may be a single word (e.g., "assistant") or multiple words (e.g., "OK computer," "are you free," etc.). To switch the display 125 from the high-power state to the low-power state, the user 110 may not interact with the computing device 120 for a particular period of time (e.g., thirty seconds), press a sleep/wake button, or any other similar actions.

In some implementations, the computing device 120 may perform some actions while in high-power mode and not perform those actions while in low-power mode to save battery power, network bandwidth, processing power, and/or any similar computing resource. For example, while in high-power mode, the computing device 120 may automatically fetch new messages from the network. While in low-power mode, the computing device may not automatically fetch new messages from the network. While in high-power mode, the computing device 120 may
automatically update or refresh any applications running in the background. While in low-power mode, the computing device 120 may not update or refresh any applications running in the background or not in the background. While in high-power mode, the computing device 120 may activate the GPS sensor for location services applications or other applications. While in low-power mode, the computing device 120 may deactivate the GPS sensor. While in high-power mode, the computing device 120 may synchronize data stored on the computing device 120 with data stored in the cloud or vice versa. While in low-power mode, the computing device may not synchronize data stored on the computing device 120 with data stored in the cloud or vice versa. While in high-power mode, the computing device 120 may automatically download application updates from an application store. While in low-power mode, the computing device 120 may not download application updates from an application store. In some implementations, the computing device 120, while in low-power mode, may perform any of the processes noted above at a lower frequency than while in high-power mode. For example, while in high-power mode, the computing device 120 may automatically fetch new messages from the network every second. While in low-power mode, the computing device may automatically fetch new messages from the network every minute.

In stage A of FIG. 1, the display 125 of the computing device 120 is in a low-power state. The display 125 displays a graphical interface 130 that includes the current date and time and an indication to enter a password to unlock the computing device 120. The user 110 may not be interacting with the computing device 120, and the computing device 120 may be in a sleep state. The computing device 120 may be sitting on a table near the user 105 and the user 110.

In stage B, the user 105 speaks the utterance 115. For example, the user 105 may speak, "Are you free for lunch tomorrow." In stage C, the computing device 120 detects the utterance 115 through a microphone. As the computing device 120 receives the utterance, the computing device 120 processes audio data 130 that corresponds to the utterance 115.

In stage D, the computing device 120 compares the audio data 130 to one or more hotword models. The computing device 120 may use hotword models to determine whether the audio data includes one of the hotwords without performing speech recognition. For example, the computing device 120 may have a hotword model for "are you free" and a hotword model for "ok computer." The computing device 120 may apply the hotword model to the audio data 130 to determine that the audio data 130 includes the hotword "are you free." In some implementations, the computing device 120 may use one hotword model that is trained to detect multiple phrases. In some implementations, the computing device 120 may use multiple hotword models that are each trained on different phrases.

In stage E, the computing device 120 performs speech recognition on the portion of the audio data 130 that did not include the hotword. For example, the computing device 120 may generate the transcription "for lunch tomorrow" by performing speech recognition on the audio data 130 that did not include "are you free."

Based on the identified hotword, the computing device 130 determines a particular application from which to access data. For example, the hotword "are you free" may trigger the computing device 130 to access the calendar application. The hotword "don't forget to" may trigger the computing device to access the reminders application. The hotword "let's go" may access a ridesharing or bike sharing application. In stage F, the computing device 120 accesses the calendar application in response to detecting the hotword "are you free."

In stage G, the computing device 120 determines the action to perform using the application accessed in stage F. The computing device 120 identifies an action based on the transcription of the audio data 130. For example, the transcription may be "for lunch tomorrow." Based on that transcription and the identified hotword, the computing device 120 may access the calendar for the following day during typical lunch hours and identify the schedule for the user 110 during those hours. As another example, the computing device 120 may identify an action based on the transcription "next week." Based on this transcription and the identified hotword of "are you free," the computing device 120 may access the calendar for the following week. As another example, the computing device 120 may identify the hotword "let's go." The computing device 120 may not identify any other words spoken after the hotword. In this instance, based the hotword "let's go," the computing device may access a ridesharing or bike sharing application.

In stage H, the computing device 120 generates the graphical interface 135 that includes the details from the application accessed in stage G. The computing device 120 displays the graphical interface 135 on the display 125 while the display 125 remains in low-power state in stage I. For example, the computing device 120 identified the schedule for lunchtime tomorrow for the user 110 by accessing the calendar. The graphical interface 135 may include information that the user 110 is free for the following day between 11am and 2pm. As another example, the computing device 120 identified the hotword "are you free" and the transcription "next week." In this instance, the computing device 120 may identify, by accessing the calendar application, several different time slots in the following week where user 110 is free. The computing device 120 generated the graphical interface 135 with some of the free time slots and information indicating that there are additional free time slots. The graphical interface 135 may indicate "July 23 10am-2pm free," July 24 1pm-3pm free," and "additional free time available." The graphical interface 135 may also indicate to enter a password to unlock the computing device 120. Instead of a password, the computing device 120 may unlock after receiving the appropriate biometric identifier. The graphical interface 135 may show a rendering of a day/week/month calendar with busy periods blocked out. The event information for each period may be blocked out so that no private information is shown on the graphical interface 135.

In some implementations, the computing device 120 may passively authenticate the primary user and adjust an amount of detail that the computing device 120 shows on the always-on display. For example, the computing device 120 may verify that the user is near the computing device 120 by recognizing the user's face in the field of view of the camera. In this instance, the computing device 120 may provide more detail on the always-on display such as the event information for each calendar appointment during the time period displayed on the always-on display. As another example, the computing device 120 may not be able to verify that user is near the computing device 120 by recognizing the user's face in the field of view of the camera. In this instance, the computing device 120 may provide less detail on the always-on display such only free/busy identifiers for each calendar appointment during the time period displayed on the always-on display. Instead of or in addition to facial recognition, the computing device 120 may determine that the primary user is nearby by identifying speech of the primary user using speaker verification or authentication. The computing device 120 may estimate a distance between the computing device 120 and the primary user by measuring a receiving volume of speech audio identified as belonging to the primary user.

In some implementations, the display 125 may be able to receive touch input while in the low-power state. In this instance, the computing device 120 may generate a graphical interface 135 that includes a button that the user can select to initiate an additional action by the computing device 120. For example, the computing device may identify the hotword "let's go" and access a ridesharing application. The graphical interface 135 may indicate that a rideshare driver is three minutes away and include a button that the user 110 can select to initiate a rideshare request. The user 110 may select the button and the display 125 may transition to the high-power state where the user 110 can complete the rideshare request. In some implementations, the user 110 may have to enter a passcode or provide other identifying information after selecting the button and before the user 110 is able to complete the rideshare request.

While the computing device 120 performs stages C through I and displays the graphical interface 135, the user 110 may not be interacting with the computing device 120 either by touching or through voice commands. In stage J, the user 110 views the display 125 of the computing device 120 and notices that the computing device 120 has automatically updates the display 125 to include the user's availability during lunchtime on the following day.

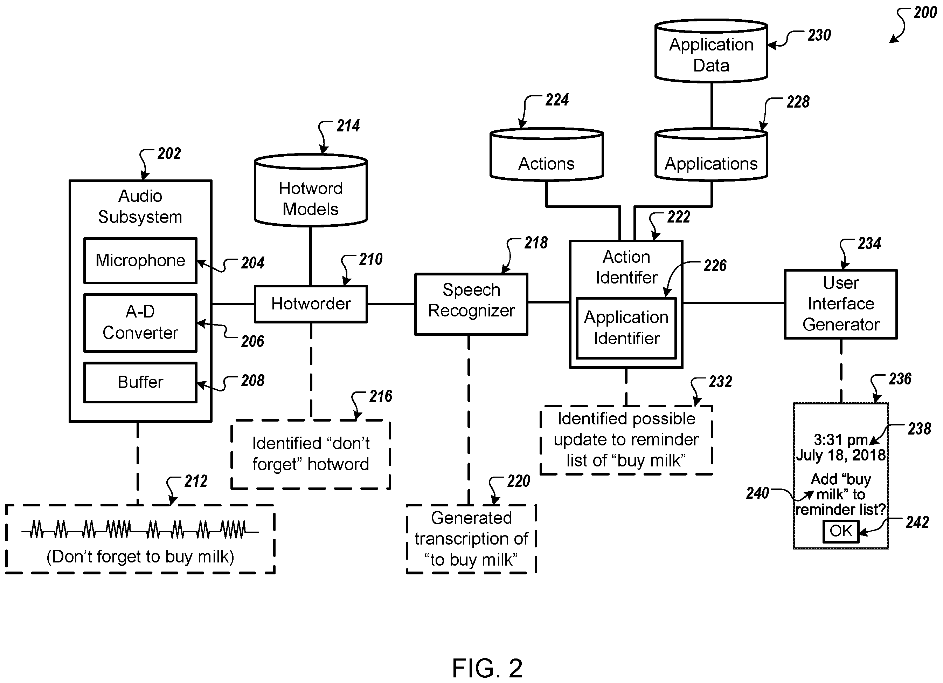

FIG. 2 illustrates an example system 200 that performs hotword recognition and provides passive assistance. The system 200 may be any type of computing device that is configured to receive and process speech audio. For example, the system 200 may be similar to computing device 120 of FIG. 1. The components of system 200 may be implemented in a single computing device or distributed over multiple computing devices. The system 200 being implemented in a single computing device may be beneficial for privacy reasons.

The system 200 includes an audio subsystem 202. The audio subsystem 202 may include a microphone 204, analog to digital converter 206, buffer 208, and various other audio filters. The microphone 204 may be configured to detect sounds in the surrounding area such as speech. The analog to digital converter 206 may be configured to sample the audio data detected by the microphone 204. The buffer 208 may store the sampled audio data for processing by the system 200. In some implementations, the audio subsystem 202 may be continuously active. In this case, the microphone 204 may be constantly detecting sound. The analog to digital converter 206 may be constantly sampling the detected audio data. The buffer 208 may store the latest sampled audio data such as the last ten seconds of sound. If other components of the system 200 do not process the audio data in the buffer 208, then the buffer 208 may overwrite the previous audio data.

In the example shown in FIG. 2, the microphone 204 may detect the utterance that corresponds to, "Don't forget to buy milk." The analog to digital converter 206 may sample the received audio data, and the buffer 208 may store the sampled audio data 212.

The audio subsystem 202 provides audio data 212 to the hotworder 210. The hotworder 210 is configured to identify hotwords in audio received through the microphone 204 and/or stored in the buffer 208. The hotworder 210 may be referred to as a hotword detector, keyword spotter, or keyword detector. In some implementations, the hotworder 210 may be active at any time that the system 200 is powered on. The hotworder 210 continuously analyzes the audio data stored in the buffer 208. The hotworder 210 computes a hotword confidence score that reflects the likelihood that current audio data in the buffer 208 includes a hotword. To compute the hotword confidence score, the hotworder 210 may use the hotword models 214. The hotworder 210 may extract audio features from the audio data 212 such as filterbank energies or mel-frequency cepstral coefficients. The hotworder 210 may use classifying windows to process these audio features such as by using a support vector machine or a neural network. In some implementations, the hotworder 210 does not perform speech recognition to determine a hotword confidence score. The hotworder 210 determines that the audio includes a hotword if the hotword confidence score satisfies a hotword confidence score threshold. For example, the hotworder 210 determines that the audio 212 includes the hotword if the hotword confidence score is 0.8 and the hotword confidence score threshold is 0.7.

In some implementations, the hotword models 214 includes hotword models for multiple hotwords. For example, the hotword models 214 may include a hotword model for "are you free," "don't forget," "let's go," "ok computer," and other terms. In some implementations, the user or another system, such as a server, may add additional hotword models. For example, the user may indicate to the system 200 to add a hotword model for "let's go." The system 200 may request that the user speak several audio samples of "let's go." The system 200 may generate a hotword model based on the different audio samples. In some implementations, the system may access

In the example shown in FIG. 2, the hotworder 210 determines the audio data 212 includes the hotword 216 "don't forget." The hotworder 210 may identify the portion of the audio data 212 that includes the hotword 216. For example, the hotworder 210 may identify for the speech recognizer 218 the portion of the "don't forget to buy milk" audio data that includes the hotword "don't forget." The hotworder 210 may provide to the speech recognizer 218 timing data that indicates that the audio data between 0.0 and 0.5 seconds includes the hotword. Alternatively or additionally, the hotworder 210 may provide to the speech recognizer 218 memory location information that indicates that the audio data stored between memory addresses 0x98b89d24 and 0x98b8e35a includes the hotword.

In some implementations, the hotworder 210 may include speaker identification capabilities. In this instance, the hotword 210 may identify a particular person who spoke the hotword or that someone other than a particular person spoke the hotword. For example, the hotworder 210 may determine that user 105 likely spoke the hotword. The hotworder 210 may provide data indicating that user 105 likely spoke the hotword to the speech recognizer 218 and/or the action identifier 222. As another example, the hotworder 210 may determine that a user other than user 110 likely spoke the hotword. The hotworder 210 may provide data indicating that a user other than user 110 likely spoke the hotword to the speech recognizer 218 and/or the action identifier 222. To perform speaker identification, the hotworder 210 may have previously collected speech data for a user by requesting that the user repeat various phrases. The hotworder 210 may have used the collected speech samples to train a speaker identification model. For example, the hotworder 210 may have used speech samples spoken by the user 110 to train a speaker identification model.

The speech recognizer 218 performs speech recognition on the audio data 212 or on the portion of the audio data 212 that does not include the hotword. The speech recognizer 218 may use a language model and an acoustic model to generate a transcription of the audio data 212 or the portion of the audio data 212 that does not include the hotword. For example, the speech recognizer 218 may perform speech recognition on the portion of the audio data 212 that does not include "don't forget" and generate the transcription 220 "to buy milk."

In some implementations, the hotworder 210 is active if the system 200 is on. In this instance, the hotworder 210 may be implemented in hardware that uses less power than the main processor of the system 200. For example, the hotworder 210 may be implemented in a digital signal processor (DSP). In some implementations, the speech recognizer 218 may be implemented in software that a processor of the system 200 executes. The speech recognizer 218 and/or the processor of the system 200 may activate in response to the hotworder 210 detecting a hotword 216.

The speech recognizer 218 provides the hotword 216 and the transcription 220 to the action identifier 222. The action identifier 222 is configured to identify an action from among the actions 224 for the system 200 to perform in response to the hotword 216 and the transcription 220. In some implementations, the action may be related to the hotword 216. For example, the hotword 216 may be "don't forget." In this instance, the hotword 216 "don't forget" may trigger the action identifier 222 to identify the action of adding a reminder to a reminder list or a calendar application. As another example, the hotword 216 may be "are you free" may trigger the action identifier 222 to identify the action of identifying free and busy time.

In some implementations, the action identifier 222 receives actions linked to hotwords from a user. For example, a user may specify to check for nearby bike sharing options in response to the hotword 216 "let's go." In some implementations, a server may specify the to check for both nearby bike sharing options and car sharing options in response to the hotword 216 "let's go."

In some implementations, the action identifier 222 may determine hotwords that are inactive because of input from a user and/or input from a server. For example, a user may specify for the action identifier 222 to not respond to the hotword "are you free." The user may input the selection for different hotwords and input additional hotwords through a menu or similar graphical interface that the system 200 provides through a display.

The action identifier 222 may provide the data identifying the action to the application identifier 226. The application identifier 226 may identify an application, from among the applications 228, as a candidate application for performing the action identified by the action identifier 222. The application identifier 226 may identify an application to access additional application data 230 to provide to the user. For example, the application identifier 226 may identify the reminders application as a candidate application for performing the action of adding a reminder to the reminder list. The action 232 may be to add a reminder to "buy milk" to the reminder application.

In some implementations, the applications 228 include applications that are installed on the system 200 and/or applications that are accessible by the system 200, for example, through a network connection. For example, an application installed on the system 200 may be a reminder application or a calendar application. An application accessible through a network connection may be a web application. In some implementations, the application data 230 for an application installed on the system 200 may be accessible through a network connection.

In some implementations, the application identifier 226 identifies the candidate application based on the transcription 220 of the portion of the audio data 212 other than the hotword 216. For example, the hotword 216 may be, "let's go" and the transcription 220 may be "to Alice's house." In this case, the action identifier 222 may identify the action of determining the availability of a dockless bike share. The action identifier 222 may access a contacts application to determine the location of Alice's house. With Alice's house within a threshold distance from the system 200, the action identifier 222 access a bike share application to determine the availability of bicycles nearby. In instances where the location following the "let's go" hotword is outside of a threshold distance, then the action identifier 222 may access a ride share application to determine the availability of ride share vehicles nearby.

In some implementations, the speaker of the hotword 210 may affect the action selected by the action identifier 222 and/or the application selected by the application identifier 226. For example, the hotword 216 "are you free" may trigger the action identifier 222 to identify an action if a speaker of the hotword 216 is someone other than the user of the system 200. The system 200 may suppress triggering of the action in response to the hotword 216 "are you free" if the speaker of the hotword 216 is the user 110. Returning to FIG. 1, because the computing device 120 determines that the user 110 did not speak the hotword "are you free," the computing device 120 identifies an action and application.

Some hotwords may have different actions depending if the speaker is the primary user (e.g., owner) of the system 200 or someone other than the primary user of the system 200. For example, the system 200 may detect "don't forget to call mom." If the speaker is someone other than the primary user, then the action identifier 222 may identify the action of adding "call mom" to the reminder list. If the speaker is the primary user, then the action identifier 222 may identify the action of automatically adding "call mom" to the reminder list or automatically scheduling a calendar appointment for "call mom."

The action identifier 222 provides the identified action 232 to the user interface generator 234. The user interface generator 234 generates a graphical interface 236 for display on a display of the system 200. The system 200 may display the graphical interface 236 while the display of the system 200 is in a low power state. For example, the user interface generator 234 may display a graphical interface 236 that includes the a button 242 that the user can select to perform the action 232 of adding "buy milk" to the reminder list.

The graphical interface 236 may include a date and time portion 238. The system 200 may display the current date and time on the date and time portion 238 at any time while the display is in a low power state. The user interface generator 234 may add an additional graphical portion 240 that includes the identified action 232. In some implementations, the additional graphical portion 240 includes the button 242. The user may select the button 242 to initiate the system 200 to perform the action 232. For example, the user may select button 242 to add "buy milk" to the reminder list. The user may transition the display to the high power state without selecting the button 242. The additional graphical portion 240 and/or the button 242 may or may not reappear when the display transitions back to the low power state.

In some implementations, the graphical interface 236 does not include the button 242. The user interface generator 234 may not include the button 242 in instances where the purpose of the additional graphical portion 240 is to inform the user of some data that may be accessible by the system 200. For example, the additional graphical portion 240 may indicate the user's schedule for the following day at lunch time. In instances where there is additional information that may not fit in the additional graphical portion 240, the user interface generator 234 may include a button 242 for the user to view the additional information.

In some implementations, the system 200 may include privacy settings that allow the user to configure the level of detail displayed in the additional graphical portion 240. The user may wish to adjust the level of details to prevent the user's calendar information from being displayed on the display of the system 200 because the display may always be on even when the display is in a low power state. As an example, the user may configure the calendar to display the details of each calendar appointment in the additional graphical portion 240. The user may also configure the calendar to display only whether the user is busy or free during the displayed time slots.

In addition to the examples described above, the system 200 may be configured to respond to the hotword "where's my phone" or "I can't find my phone." In this instance, the system 200 may only respond if the system 200 can verify that the primary user of the system 200 is speaking the hotword using speaker verification or authentication. In response to the hotword, the system 200 may flash and/or brighten the always-on display, play a sound from the speaker, and/or activate a location module and transmit the location of the system 200 to another device (e.g., an email address and/or phone number designated by the primary user). The system 200 may also be configured to respond to the hotword "what's the weather today?" or "is it sunny today?" In this instance, the system 200 system may respond by the user interface generator 234 generating an interface that includes the weather forecast The system 200 may provide the weather forecast interface to the display of the system 200 for presentation on the always-on display. In some implementations, the system 200 may only respond to the hotword "what's the weather today?" or "is it sunny today?" if the system 200 can verify that the primary user of the system 200 is speaking the hotword using speaker verification or authentication.

In some implementations, the system 200 may be configured to detect a hotword "ok, I'll do it" or "will do it." The system 200 may detect these hotwords after a speaker other than the primary user says something related to a reminder. The system 200 may update the user interface 236 with any details that follow the hotword, such as a time period. For example, the speaker other than the primary user may say, "Don't forget to call mom." The primary user responds, "ok, I'll do it tomorrow." The system 200 recognizes the hotword "don't forget," recognizes the speech of "to call mom," and identifies the action of calling mom. The system 200 recognizes the hotword "ok, I'll do it," recognizes the speech of "tomorrow," and identifies the time period of tomorrow. The system 200 may generate a user interface 236 that indicates not to forget to call mom tomorrow for display on the always-on display. The user interface 236 may also include a selectable option 242 as described above.

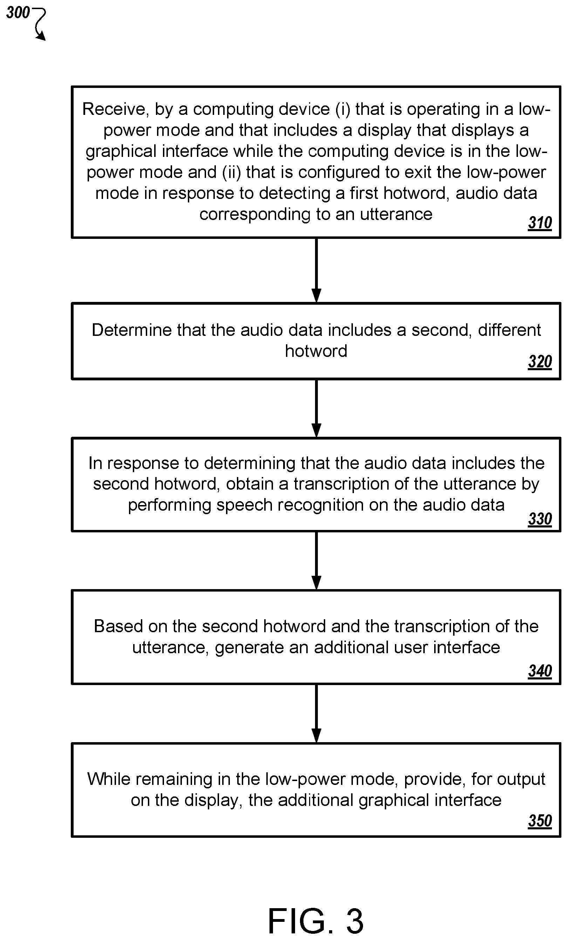

FIG. 3 illustrates an example process 300 for performing hotword recognition and providing passive assistance. In general, the process 300 performs speech recognition on audio that includes a predefined hotword. The process 300 outputs a result related to the transcription of the audio on a display while the display remains in low-power mode. The process 300 will be described as being performed by a computer system comprising one or more computers, for example, the computing device 120 of FIG. 1 or system 200 of FIG. 2.

The system is operating in a low-power mode and that includes a display that displays a graphical interface while the system is in the low-power mode and (ii) that is configured to exit the low-power mode in response to detecting a first hotword and receives audio data corresponding to an utterance (310). For example, the system may be configured to exit the low-power mode in response to the hotword "OK computer." In this case, the system may brighten the display to indicate that the system is listening for further input from the speaker. In some implementations, the system may not brighten the display until the user has stopped speaking for a threshold period of time. For example, the speaker may say "OK computer" and pause for two seconds. In this case, the display may brighten and include a prompt asking the speaker how the system can help. As another example, the speaker may say "OK computer, call Mom" and pause for two seconds. In this case, the display may brighten and the system may open the phone application an initiate a call to Mom.

In some implementations, the display of the system is a touch sensitive display. The display may not be able to receive touch input while the system is in low-power mode. The display may be able to receive touch input while the system is in high-power mode. In low-power mode, the system may be locked and display the date and time on the display. In high-power mode, the system may be unlocked and display the home screen or an application on the display.

The system determines that the audio data includes a second, different hotword (320). For example, the system may receive audio data for "are you free." In some implementations, the system receives hotword models for the various hotwords that the system is configured to identify. The system may receive hotword models for "OK computer," "are you free," "don't forget," and other terms and phrases. The system may be configured to identify a hotword without using speech recognition. The system may use a hotword identifier that continuously operates on the detected audio. The hotword identifier may apply the hotword models to the detected audio and determine that the system received "are you free."

In some implementations, the system remains in low-power mode in response to detecting a hotword other than "OK computer." For example, the system remains in low-power mode in response to detecting the hotword "are you free." The hotword "OK computer" may be a way for a user to directly address the system. In response to receiving "OK computer," the system may attempt to identify additional audio data that includes a command such as "text Alice that I'll be home soon," "order a large cheese pizza," or "what is my next appointment." The system performs the identified command and actively initiates the command. The system may send the text, order the pizza, or display the next appointment. The other hotwords such as "are you free" and "don't forget" are more likely to occur during a conversation between people. These hotwords may trigger the system to listen for additional speech following the hotword. The system may passively provide information or request permission for additional action in response to the other hotwords and the speech that follows.

The system, in response to determining that the audio data includes the second hotword, obtain a transcription of the utterance by performing speech recognition on the audio data (330). For example, the system performs speech recognition on the audio data following the hotword "are you free" and generates the transcription "for lunch tomorrow." In some implementations, the system determines that the speaker of the second hotword is not the primary user of the system. The primary user of the system may be the owner of the system (e.g., the owner of a smart phone) or the person who uses the system most of the time. If the speaker is someone other than the primary user, then the system activates the speech recognizer and obtains the transcription of the utterance by performing speech recognition on the audio data. The speaker being someone other than the primary user may indicate that the primary user is speaking with another person. If the speaker is the primary user, then the system may not obtain the transcription of the utterance and may not output any additional information on the display.

The system, based on the second hotword and the transcription of the utterance, generates an additional user interface (340). For example, the system may generate an additional user interface that indicates the schedule for the user of the system during lunch time the following day. In some implementations, the system identifies an application based on the second hotword and the transcription. The system may access the application for information to generate the additional user interface. For example, the system may access the calendar application in response to "are you free for lunch tomorrow." As another example, the system can access the reminders application in response to "don't forget to call mom." Each hotword may be linked to an application. The hotword "are you free" triggers the system to access the calendar application. The hotword "don't forget" triggers the system to access the reminders application.

The system, while remaining in the low-power mode, provides, for output on the display, the additional graphical interface (350). For example, the system display a graphical interface that includes the date, time, and the user's free/busy schedule for the following day between 11am and 2pm. In some implementations, the additional graphical interface includes a button that the user can select for the system to initiate an action. For example, the additional graphical interface may include a button to add "call mom" to the reminders list. In this instance, the user may be able to select the button to add "call mom" to the reminders list. Selection of the button may also trigger the user to unlock the system. The user presses the button, unlocks the system, and the system updates the reminders list. If the user presses the button and fails to unlock the phone, then the button may remain as part of the graphical interface.

In some implementations, the user may press a button or key on the system. In response to the button or key press, the system may switch to high-power mode. The button may be a physical button such as sleep/wake button. In some implementations, the button or key press may be a particular touch gesture performed on the display, e.g. a diagonal swipe or a user selected gesture. The user may press the button, perform the gesture again, or wait a period of time (e.g., ten seconds) for the system to return to low-power mode. In some implementations, the display may continue to display additional graphical interface when the system returns to low-power mode. For example, the system may continue to display the user's busy/free time for lunch the following day. In some implementations, the system display the original graphical interface when the system returns to low-power mode. In some implementations, the system may open the application that the system accessed to generate the additional user interface when switching to high-power mode. For example, the system may open the calendar application when the system switches to high-power mode and the user unlocks the system.

In some implementations, the system may detect a user speaking the first hotword, e.g., "OK computer." In this instance, the system may switch to high-power mode and await a command from the speaker. If the speaker does not say anything else within a threshold period of time, then the system may return to low-power mode. In some implementations, the system may only respond to the first hotword if the primary user of the system speaks the first hotword. If a speaker other than the primary user speaks the first hotword, then the system may not switch to high-power mode and may ignore any commands spoken by the user after the first hotword. In some implementations, the system may only respond to hotwords other than "ok computer" (e.g., "are you free" and "don't forget") while the system is in low-power mode. The system may not response to hotwords other than "ok computer" while the system is in high-power mode.

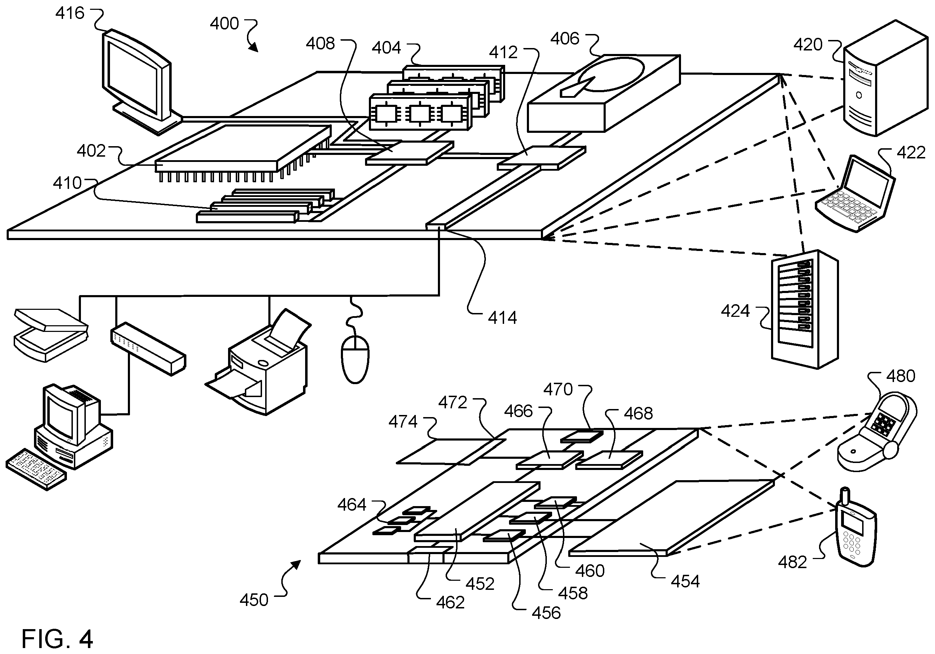

FIG. 4 shows an example of a computing device 400 and a mobile computing device 450 that can be used to implement the techniques described here. The computing device 400 is intended to represent various forms of digital computers, such as laptops, desktops, workstations, personal digital assistants, servers, blade servers, mainframes, and other appropriate computers. The mobile computing device 450 is intended to represent various forms of mobile devices, such as personal digital assistants, cellular telephones, smart-phones, and other similar computing devices. The components shown here, their connections and relationships, and their functions, are meant to be examples only, and are not meant to be limiting.

The computing device 400 includes a processor 402, a memory 404, a storage device 406, a high-speed interface 408 connecting to the memory 404 and multiple high-speed expansion ports 410, and a low-speed interface 412 connecting to a low-speed expansion port 414 and the storage device 406. Each of the processor 402, the memory 404, the storage device 406, the high-speed interface 408, the high-speed expansion ports 410, and the low-speed interface 412, are interconnected using various busses, and may be mounted on a common motherboard or in other manners as appropriate. The processor 402 can process instructions for execution within the computing device 400, including instructions stored in the memory 404 or on the storage device 406 to display graphical information for a GUI on an external input/output device, such as a display 416 coupled to the high-speed interface 408. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multi-processor system).

The memory 404 stores information within the computing device 400. In some implementations, the memory 404 is a volatile memory unit or units. In some implementations, the memory 404 is a non-volatile memory unit or units. The memory 404 may also be another form of computer-readable medium, such as a magnetic or optical disk.

The storage device 406 is capable of providing mass storage for the computing device 400. In some implementations, the storage device 406 may be or contain a computer-readable medium, such as a floppy disk device, a hard disk device, an optical disk device, or a tape device, a flash memory or other similar solid state memory device, or an array of devices, including devices in a storage area network or other configurations. Instructions can be stored in an information carrier. The instructions, when executed by one or more processing devices (for example, processor 402), perform one or more methods, such as those described above. The instructions can also be stored by one or more storage devices such as computer- or machine-readable mediums (for example, the memory 404, the storage device 406, or memory on the processor 402).

The high-speed interface 408 manages bandwidth-intensive operations for the computing device 400, while the low-speed interface 412 manages lower bandwidth-intensive operations. Such allocation of functions is an example only. In some implementations, the high-speed interface 408 is coupled to the memory 404, the display 416 (e.g., through a graphics processor or accelerator), and to the high-speed expansion ports 410, which may accept various expansion cards (not shown). In the implementation, the low-speed interface 412 is coupled to the storage device 406 and the low-speed expansion port 414. The low-speed expansion port 414, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 400 may be implemented in a number of different forms, as shown in the figure. For example, it may be implemented as a standard server 420, or multiple times in a group of such servers. In addition, it may be implemented in a personal computer such as a laptop computer 422. It may also be implemented as part of a rack server system 424. Alternatively, components from the computing device 400 may be combined with other components in a mobile device (not shown), such as a mobile computing device 450. Each of such devices may contain one or more of the computing device 400 and the mobile computing device 450, and an entire system may be made up of multiple computing devices communicating with each other.

The mobile computing device 450 includes a processor 452, a memory 464, an input/output device such as a display 454, a communication interface 466, and a transceiver 468, among other components. The mobile computing device 450 may also be provided with a storage device, such as a micro-drive or other device, to provide additional storage. Each of the processor 452, the memory 464, the display 454, the communication interface 466, and the transceiver 468, are interconnected using various buses, and several of the components may be mounted on a common motherboard or in other manners as appropriate.

The processor 452 can execute instructions within the mobile computing device 450, including instructions stored in the memory 464. The processor 452 may be implemented as a chipset of chips that include separate and multiple analog and digital processors. The processor 452 may provide, for example, for coordination of the other components of the mobile computing device 450, such as control of user interfaces, applications run by the mobile computing device 450, and wireless communication by the mobile computing device 450.

The processor 452 may communicate with a user through a control interface 458 and a display interface 456 coupled to the display 454. The display 454 may be, for example, a TFT (Thin-Film-Transistor Liquid Crystal Display) display or an OLED (Organic Light Emitting Diode) display, or other appropriate display technology. The display interface 456 may comprise appropriate circuitry for driving the display 454 to present graphical and other information to a user. The control interface 458 may receive commands from a user and convert them for submission to the processor 452. In addition, an external interface 462 may provide communication with the processor 452, so as to enable near area communication of the mobile computing device 450 with other devices. The external interface 462 may provide, for example, for wired communication in some implementations, or for wireless communication in other implementations, and multiple interfaces may also be used.

The memory 464 stores information within the mobile computing device 450. The memory 464 can be implemented as one or more of a computer-readable medium or media, a volatile memory unit or units, or a non-volatile memory unit or units. An expansion memory 474 may also be provided and connected to the mobile computing device 450 through an expansion interface 472, which may include, for example, a SIMM (Single In Line Memory Module) card interface. The expansion memory 474 may provide extra storage space for the mobile computing device 450, or may also store applications or other information for the mobile computing device 450. Specifically, the expansion memory 474 may include instructions to carry out or supplement the processes described above, and may include secure information also. Thus, for example, the expansion memory 474 may be provide as a security module for the mobile computing device 450, and may be programmed with instructions that permit secure use of the mobile computing device 450. In addition, secure applications may be provided via the SIMM cards, along with additional information, such as placing identifying information on the SIMM card in a nonhackable manner.

The memory may include, for example, flash memory and/or NVRAM memory (non-volatile random access memory), as discussed below. In some implementations, instructions are stored in an information carrier. that the instructions, when executed by one or more processing devices (for example, processor 452), perform one or more methods, such as those described above. The instructions can also be stored by one or more storage devices, such as one or more computer- or machine-readable mediums (for example, the memory 464, the expansion memory 474, or memory on the processor 452). In some implementations, the instructions can be received in a propagated signal, for example, over the transceiver 468 or the external interface 462.

The mobile computing device 450 may communicate wirelessly through the communication interface 466, which may include digital signal processing circuitry where necessary. The communication interface 466 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 468 using a radio-frequency. In addition, short-range communication may occur, such as using a Bluetooth, WiFi, or other such transceiver (not shown). In addition, a GPS (Global Positioning System) receiver module 470 may provide additional navigation- and location-related wireless data to the mobile computing device 450, which may be used as appropriate by applications running on the mobile computing device 450.

The mobile computing device 450 may also communicate audibly using an audio codec 460, which may receive spoken information from a user and convert it to usable digital information. The audio codec 460 may likewise generate audible sound for a user, such as through a speaker, e.g., in a handset of the mobile computing device 450. Such sound may include sound from voice telephone calls, may include recorded sound (e.g., voice messages, music files, etc.) and may also include sound generated by applications operating on the mobile computing device 450.

The mobile computing device 450 may be implemented in a number of different forms, as shown in the figure. For example, it may be implemented as a cellular telephone 480. It may also be implemented as part of a smart-phone 482, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. For example, while a client application is described as accessing the delegate(s), in other implementations the delegate(s) may be employed by other applications implemented by one or more processors, such as an application executing on one or more servers. In addition, the logic flows depicted in the figures do not require the particular order shown, or sequential order, to achieve desirable results. In addition, other actions may be provided, or actions may be eliminated, from the described flows, and other components may be added to, or removed from, the described systems. Accordingly, other implementations may fall within the scope of the following claims.

## Claims

1. A computer-implemented method performed by a computing device,
wherein the computing device is configured to:
operate a display of the computing device at a first brightness while in a high-power mode;
operate the display at a second brightness while in a low-power mode, the second brightness less bright than the first brightness, wherein the display displays a graphical interface while the computing device is in the low-power mode; and
exit the low-power mode in response to detecting a first hotword,
the method comprising:
while operating the computing device in the low-power mode:
receiving audio data corresponding to an utterance comprising a second hotword different than the first hotword;
detecting the second hotword in the audio data;
in response to detecting the second hotword in the audio data:
obtaining a transcription of the utterance by performing speech recognition on the audio data;
based on the second, different hotword, identifying an application accessible by the computing device;
providing the transcription of the utterance to the application; and
based on the second, different hotword and the transcription of the utterance, generating, by the computing device, an additional user interface, wherein the additional user interface is generated based on providing the transcription of the utterance to the application;
receiving additional audio data corresponding to another utterance comprising the first hotword;
detecting the first hotword in the additional audio data; and
based on detecting the first hotword in the additional audio data, causing the computing device to switch from operating in the low-power mode to operating in the high-power mode,
wherein each of the first and second hotwords is a predetermined word that is spoken to invoke the attention of the computing device.

2. The method of claim 1, wherein:
while in the high-power mode, the computing device fetches data from a network at a first frequency, and
while in the low-power mode, the computing device fetches data from the network at a second, lower frequency.

3. The method of any preceding claim, wherein the display comprises a touch sensitive display.

4. The method of claim 3, wherein:
when the computing device operates in the low-power mode, the display is unable to receive touch input, and
when the computing device operates in the high-power mode, the display is able to receive touch input.

5. The method of any preceding claim, wherein the computing device consumes more power when operating in the high-power mode than when operating in the low-power mode.

6. The method of any preceding claim, wherein the operations further comprise:
receiving a first hotword model of the first hotword,
wherein detecting the first hotword in the additional audio data comprises detecting the first hotword in the additional audio data using the first hotword model without performing speech recognition on the audio data.

7. The method of claim 6, wherein the operations further comprise:
receiving a second hotword model of the second hotword,
wherein detecting the second hotword in the audio data comprises detecting the second hotword in the audio data using the second hotword model without performing speech recognition on the audio data.

8. The method of any preceding claim, wherein the operations further comprise:
determining that a speaker of the utterance is not a primary user of the computing device,
wherein obtaining the transcription of the utterance is based on determining that the speaker of the utterance is not the primary user of the computing device.

9. The method of any preceding claim, wherein the operations further comprise:
determining that a speaker of the additional utterance is a primary user of the computing device,
wherein causing the computing device to switch from operating in the low-power mode to operating in the high-power mode is further based on determining that the speaker of the additional utterance is the primary user of the computing device.

10. The method of any preceding claim, wherein the computing device comprises a smart phone.

11. A computing device comprising:
data processing hardware; and
memory hardware in communication with the data processing hardware and storing instructions that when executed on the data processing hardware causes the data processing hardware to carry out the method of any preceding claim.

## Patentansprüche

1. Computerimplementiertes Verfahren, das durch eine Rechenvorrichtung durchgeführt wird,
wobei die Rechenvorrichtung zu Folgendem konfiguriert ist:
Betreiben einer Anzeige der Rechenvorrichtung mit einer ersten Helligkeit in einem Hochleistungsmodus;
Betreiben der Anzeige in einem Energiesparmodus mit einer zweiten Helligkeit, wobei die zweite Helligkeit geringer ist als die erste Helligkeit, wobei die Anzeige eine grafische Oberfläche anzeigt, während sich die Rechenvorrichtung in dem Energiesparmodus befindet; und
Austreten aus dem Energiesparmodus als Reaktion auf das Erkennen eines ersten Hotwords, wobei das Verfahren Folgendes umfasst:
während des Betreibens der Rechenvorrichtung in dem Energiesparmodus:
Empfangen von Audiodaten, die einer Äußerung entsprechen, die ein zweites Hotword umfasst, das sich von dem ersten Hotword unterscheidet;
Erkennen des zweiten Hotwords in den Audiodaten;
als Reaktion auf das Erkennen des zweiten Hotwords in den Audiodaten:
Erlangen einer Transkription der Äußerung durch Durchführen einer Spracherkennung an den Audiodaten;
basierend auf dem zweiten, anderen Hotword, Identifizieren einer Anwendung, auf die die Rechenvorrichtung zugreifen kann;
Bereitstellen der Transkription der Äußerung an die Anwendung; und
basierend auf dem zweiten, anderen Hotword und der Transkription der Äußerung, Erzeugen einer zusätzlichen Benutzeroberfläche durch die Rechenvorrichtung, wobei die zusätzliche Benutzeroberfläche basierend auf dem Bereitstellen der Transkription der Äußerung an die Anwendung erzeugt wird;
Empfangen von zusätzlichen Audiodaten, die einer anderen Äußerung entsprechen, die das erste Hotword umfasst;
Erkennen des ersten Hotwords in den zusätzlichen Audiodaten; und
basierend auf dem Erkennen des ersten Hotwords in den zusätzlichen Audiodaten Veranlassen, dass die Rechenvorrichtung vom Betrieb im Energiesparmodus zum Betrieb im Hochleistungsmodus wechselt,
wobei jedes von dem ersten und zweiten Hotword ein vorbestimmtes Wort ist, das gesprochen wird, um die Aufmerksamkeit der Rechenvorrichtung zu erregen.

2. Verfahren nach Anspruch 1, wobei:
die Rechenvorrichtung im Hochleistungsmodus Daten aus einem Netzwerk mit einer ersten Frequenz abruft, und
die Rechenvorrichtung im Energiesparmodus Daten aus einem Netzwerk mit einer zweiten, niedrigeren Frequenz abruft.

3. Verfahren nach einem der vorhergehenden Ansprüche, wobei die Anzeige eine berührungsempfindliche Anzeige umfasst.

4. Verfahren nach Anspruch 3, wobei:
wenn die Rechenvorrichtung im Energiesparmodus betrieben wird, die Anzeige keine Berührungseingabe empfangen kann, und
wenn die Rechenvorrichtung im Hochleistungsmodus betrieben wird, die Anzeige Berührungseingaben empfangen kann.

5. Verfahren nach einem der vorhergehenden Ansprüche, wobei die Rechenvorrichtung bei Betrieb im Hochleistungsmodus mehr Leistung verbraucht als bei Betrieb im Energiesparmodus.

6. Verfahren nach einem der vorhergehenden Ansprüche, wobei die Operationen ferner Folgendes umfassen:
Empfangen eines ersten Hotword-Modells des ersten Hotwords,
wobei das Erkennen des ersten Hotwords in den zusätzlichen Audiodaten Erkennen des ersten Hotwords in den zusätzlichen Audiodaten unter Verwendung des ersten Hotword-Modells umfasst, ohne eine Spracherkennung an den Audiodaten durchzuführen.

7. Verfahren nach Anspruch 6, wobei die Operationen ferner Folgendes umfassen:
Empfangen eines zweiten Hotword-Modells des zweiten Hotwords,
wobei das Erkennen des zweiten Hotwords in den Audiodaten Erkennen des zweiten Hotwords in den Audiodaten unter Verwendung des zweiten Hotword-Modells umfasst, ohne eine Spracherkennung an den Audiodaten durchzuführen.

8. Verfahren nach einem der vorhergehenden Ansprüche, wobei die Operationen ferner Folgendes umfassen:
Bestimmen, dass ein Sprecher der Äußerung kein Hauptbenutzer der Rechenvorrichtung ist,
wobei das Erlangen der Transkription der Äußerung auf dem Bestimmen basiert, dass der Sprecher der Äußerung nicht der Hauptbenutzer der Rechenvorrichtung ist.

9. Verfahren nach einem der vorhergehenden Ansprüche, wobei die Operationen ferner Folgendes umfassen:
Bestimmen, dass ein Sprecher der zusätzlichen Äußerung ein Hauptbenutzer der Rechenvorrichtung ist,
wobei das Veranlassen, dass die Rechenvorrichtung vom Betrieb im Energiesparmodus zum Betrieb im Hochleistungsmodus wechselt, ferner auf dem Bestimmen basiert, dass der Sprecher der zusätzlichen Äußerung der Hauptbenutzer der Rechenvorrichtung ist.

10. Verfahren nach einem der vorhergehenden Ansprüche, wobei die Rechenvorrichtung ein Smartphone umfasst.

11. Rechenvorrichtung, umfassend:
Datenverarbeitungshardware; und
Speicherhardware, die mit der Datenverarbeitungshardware in Kommunikation steht und Anweisungen speichert, die bei Ausführung durch die Datenverarbeitungshardware die Datenverarbeitungshardware veranlassen, das Verfahren nach einem der vorhergehenden Ansprüche durchzuführen.

## Revendications

1. Procédé mis en œuvre par ordinateur et exécuté par un dispositif informatique,
dans lequel le dispositif informatique est configuré pour :
faire fonctionner un écran du dispositif informatique à une première luminosité tout en étant dans un mode haute puissance ;
faire fonctionner l'écran à une seconde luminosité tout en étant en mode basse puissance, la seconde luminosité étant moins intense que la première luminosité, dans lequel l'écran affiche une interface graphique pendant que le dispositif informatique est en mode basse puissance ; et
quitter le mode basse puissance en réponse à la détection d'un premier mot clé déclencheur, le procédé comprenant :
lors du fonctionnement du dispositif informatique en mode basse puissance :
la réception des données audio correspondant à un énoncé comprenant un second mot clé déclencheur différent du premier mot clé déclencheur ;
la détection du second mot clé déclencheur dans les données audio ;
en réponse à la détection du second mot clé déclencheur dans les données audio :
l'obtention d'une transcription de l'énoncé en effectuant une reconnaissance vocale sur les données audio ;
sur la base du second mot clé déclencheur différent, l'identification d'une application accessible par le dispositif informatique ;
la fourniture de la transcription de l'énoncé à l'application ; et
sur la base du second mot clé déclencheur différent et de la transcription de l'énoncé, la génération, par le dispositif informatique, d'une interface utilisateur supplémentaire, dans lequel l'interface utilisateur supplémentaire est générée sur la base de la fourniture de la transcription de l'énoncé à l'application ;
la réception des données audio supplémentaires correspondant à un autre énoncé comprenant le premier mot clé déclencheur ;
la détection du premier mot clé déclencheur dans les données audio supplémentaires ; et
sur la base de la détection du premier mot clé déclencheur dans les données audio supplémentaires, provoquant le passage du dispositif informatique du mode basse puissance au mode haute puissance,
dans lequel chacun des premier et second mots clés déclencheurs est un mot prédéterminé qui est prononcé pour attirer l'attention du dispositif informatique.

2. Procédé selon la revendication 1, dans lequel :
tout en étant en mode haute puissance, le dispositif informatique récupère des données d'un réseau à une première fréquence, et
tout en étant en mode basse puissance, le dispositif informatique récupère des données du réseau à une seconde fréquence plus basse.

3. Procédé selon une quelconque revendication précédente, dans lequel l'écran comprend un écran sensible tactile.

4. Procédé selon la revendication 3, dans lequel :
lorsque le dispositif informatique fonctionne en mode basse puissance, l'écran ne peut pas recevoir d'entrée tactile, et
lorsque le dispositif informatique fonctionne en mode haute puissance, l'écran peut recevoir une entrée tactile.

5. Procédé selon une quelconque revendication précédente, dans lequel le dispositif informatique consomme plus d'énergie lorsqu'il fonctionne en mode haute puissance que lorsqu'il fonctionne en mode basse puissance.

6. Procédé selon une quelconque revendication précédente, dans lequel les opérations comprennent également :
la réception d'un premier modèle de mot clé déclencheur du premier mot clé déclencheur,
dans lequel la détection du premier mot clé déclencheur dans les données audio supplémentaires comprend la détection du premier mot clé déclencheur dans les données audio supplémentaires à l'aide du premier modèle de mot clé déclencheur sans effectuer de reconnaissance vocale sur les données audio.

7. Procédé selon la revendication 6, dans lequel les opérations comprennent également :
la réception d'un second modèle de mot clé déclencheur du second mot clé,
dans lequel la détection du second mot clé déclencheur dans les données audio comprend la détection du second mot clé déclencheur dans les données audio à l'aide du second modèle de mot clé déclencheur sans effectuer de reconnaissance vocale sur les données audio.

8. Procédé selon une quelconque revendication précédente, dans lequel les opérations comprennent également :
la détermination qu'un locuteur de l'énoncé n'est pas l'utilisateur principal du dispositif informatique,
dans lequel l'obtention de la transcription de l'énoncé est basée sur la détermination que le locuteur de l'énoncé n'est pas l'utilisateur principal du dispositif informatique.

9. Procédé selon une quelconque revendication précédente, dans lequel les opérations comprennent également :
la détermination qu'un locuteur de l'énoncé supplémentaire est un utilisateur principal du dispositif informatique,
dans lequel le passage du fonctionnement en mode basse puissance au fonctionnement en mode haute puissance du dispositif informatique est également basé sur la détermination que le locuteur de l'énoncé supplémentaire est l'utilisateur principal du dispositif informatique.

10. Procédé selon une quelconque revendication précédente, dans lequel le dispositif informatique comprend un téléphone intelligent.

11. Dispositif informatique comprenant :
un matériel de traitement de données ; et
un matériel de mémoire en communication avec le matériel de traitement de données et stockant des instructions qui, lorsqu'elles sont exécutées sur le matériel de traitement de données, amènent le matériel de traitement de données à réaliser le procédé selon une quelconque revendication précédente.
